# EUROPEAN PATENT APPLICATION

(11) **EP 1 391 804 A2**
(43) Date of publication of application: **25.02.2004**
(21) Application number: 03005887.9
(22) Date of filing: 17.03.2003
(51) Int. Cl.: G06F 1/26

(54) **Method and apparatus for preventing a motherboard from burning**

(30) Priority: 26.04.2002 CN 02231204
(71) Applicant: Shuttle Inc., Nei-Hu Dist., Taipei (TW)
(72) Inventor: Shao, Jung-Hui, Taipei (TW)
(74) Representative: Helms, Joachim, Dipl.-Ing. Patentanwalt

(57) **Abstract**

The present invention provides an apparatus and a method for preventing a motherboard from burning, wherein, the apparatus comprises: a detection circuit for determining a card plugged in the AGP slot being a AGP2X card or a AGP4X card and generating a DETAGP2X signal when detecting the AGP2X card; a first power controlling circuit, making the first power controlling circuit becomes an open circuit when the DETCARDIN signal enabling, and making the first power controlling circuit becomes a close circuit when the DETCARDIN signal disabling; a second power controlling circuit, making the second power controlling circuit becomes an open circuit when the DETAGP2X signal enabling, and making the second power controlling circuit becomes a close circuit when the DETAGP2X signal disabling; and a button, making a DC power pass through the first power controlling circuit and the second power controlling circuit to provide the DC power to the motherboard when the button is pressed. Furthermore, the present invention also discloses a method for preventing a motherboard from burning.

## Description

### FIELD OF THE INVENTION

The present invention relates generally to a motherboard. More particularly, the present invention relates to a method and apparatus for preventing burning a motherboard, wherein, a second power controlling circuit will become an open circuit when an AGP card is plugged in an AGP slot and prevents the motherboard from being powered on normally so as to achieve an objective to prevent the motherboard from burning.

### BACKGROUND OF THE INVENTION

Recently, the motherboard most have an AGP slot. Because the process technology of Integrated Circuit (IC) has progressed rapidly, the AGP slot progressed from 2X speed to 4X speed. Wherein, the working voltage of the AGP2X graphic card is DC 3.3V, while the working voltage of the AGP4X graphic card is DC 1.5V. However, the AGP slot doesn't have an anti-miss-inserting feature. If a user plugs an AGP2X graphic card into the AGP slot and then powers on the computer, the DC 3.3V power of the AGP2X graphic card will enter into the chipset of the motherboard whose working voltage is DC 1.5V via the AGP slot and burn the chipset, causing financial loss to the user.

Therefore, it needs a method and apparatus for preventing over-heating/burning the chipset of a motherboard when the user plugs an AGP2X graphic card into the AGP slot and powers on the computer.

### SUMMARY OF THE INVENTION

To solve the above problems, it is an object of the present invention to provide a method and apparatus to prevent burning the motherboard. The present invention prevents the computer from being powered on normally when the user plugs an AGP2X graphic card into the AGP slot so as to prevent the chipset supported AGP4X from being burned.

To accomplish the above object of the present invention, there is provided an apparatus to prevent burning the motherboard, wherein, the apparatus comprises: a detection circuit for determining if a card plugged in the AGP slot being an AGP2X card or an AGP4X card and generating a DETAGP2X signal when detecting the AGP2X card; a first power controlling circuit, making the first power controlling circuit becomes an open circuit when the DETCARDIN signal enabling, and making the first power controlling circuit becomes a close circuit when the DETCARDIN signal disabling; a second power controlling circuit, making the second power controlling circuit becomes an open circuit when the DETAGP2X signal enabling, and making the second power controlling circuit becomes a close circuit when the DETAGP2X signal disabling; and a button, making a DC power pass through the first power controlling circuit and the second power controlling circuit for providing the DC power to the motherboard when the button is pressed.

The present invention also provides a method to prevent burning the motherboard, wherein, the method comprises the steps of: providing a detection circuit for determining an AGP card plugged in the AGP slot; providing a first power controlling circuit; if there is no card plugged in the AGP slot, making the first power controlling circuit becomes an open circuit; if there is an AGP card plugged in the AGP slot, making the first power controlling circuit becomes a close circuit; determining the card plugged in the AGP slot is an AGP2X card or an AGP4X card; and providing a second power controlling circuit, if the AGP card plugged in the AGP slot is a AGP4X card, making the first power controlling circuit becomes an open circuit, and then DC power could pass to the motherboard and the motherboard could be powered on normally; if the AGP card plugged in the AGP slot is an AGP2X card, making the second power controlling circuit becomes an open circuit to prevent the DC power passing to the motherboard so as to achieve an objective to prevent the motherboard being burned.

The novel features of the invention are set forth with particularly in the appended claims. The invention will be best understood from the following description when read in conjunction with the accompanying drawings.

### BRIEF DESCRIPTION OF THE DRAWINGS

Fig. 1 shows a block diagram of an apparatus for preventing a motherboard from burning in accordance with one embodiment of the present invention.
Fig. 2 shows a flowchart of a method for preventing a motherboard from burning in accordance with one embodiment of the present invention.

### DESCRIPTION OF THE PREFERRED EMBODIMENTS

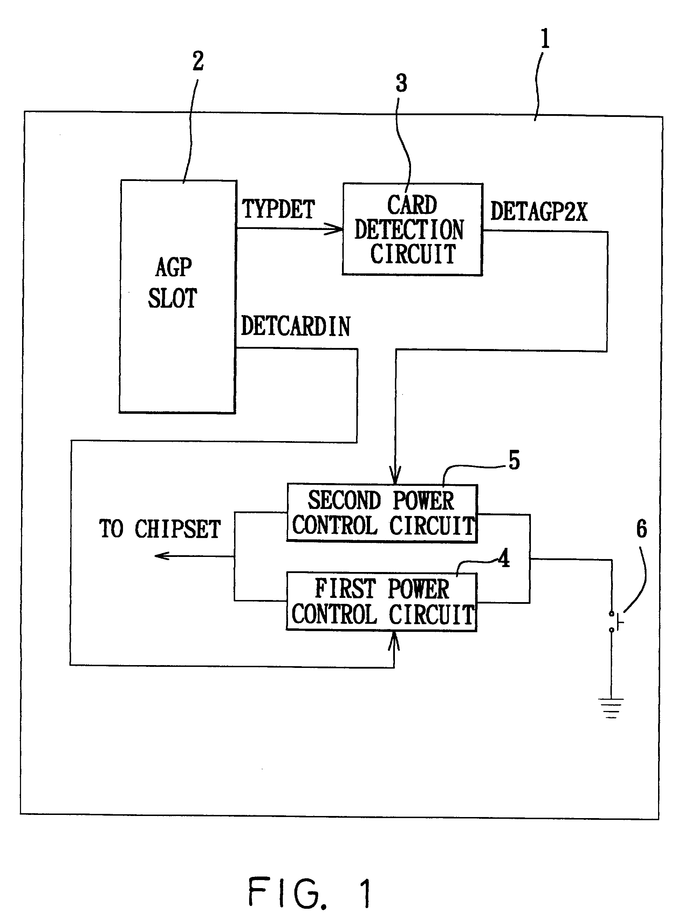

Referring to Fig. 1 shows a block diagram of an apparatus for preventing a motherboard from burning in accordance with one embodiment of the present invention. As shown in Fig. 1, the apparatus for preventing of a motherboard from burning is positioned in a motherboard **1**, wherein, the motherboard **1** comprising an AGP slot **2**, and the AGP slot **2** comprising a DETCARDIN signal and a TYPEDET signal, the apparatus comprises: a detection circuit **3**; a first power controlling circuit **4**, a second power controlling circuit **5** and a button **6**.

Wherein, the detection circuit **3** is coupled to the AGP slot **2** for determining a card plugged in the AGP slot **2** being an AGP2X card or an AGP4X card according to the TYPEDET signal, and generating a DETAGP2X signal when detecting the AGP2X card. Wherein, the detection circuit **3** is a transistor preferably, it could be a PNP or NPN type transistor. When an AGP graphic card (not shown) is plugged in the AGP slot **2**, the TYPEDET becoming enabling and then turning on the transistor and enabling the DETAGP2X signal.

Wherein, the first power controlling circuit **4** is coupled to the AGP slot **2**. When the AGP graphic card (not shown) is plugged in the AGP slot **2**, the DETCARDIN signal becoming enable, furthermore, making the first power controlling circuit **4** become open circuit. When there is an AGP graphic card plugged in the AGP slot **2**, the DETCARDIN signal becoming disable, furthermore, making the first power controlling circuit **4** become close circuit. While the button **6** is pressed, the DC power could provide to the chipset (not shown). Wherein, the first power controlling circuit **4** is not limited to be a FET (Field Effect Transistor), it could be a any type FET.

Wherein, the second power controlling circuit **5** is coupled to the detection circuit **3**. When the DETAGP2X signal is enabled, making the second power controlling circuit **5** becomes an open circuit. When the DETAGP2X signal is disabled, making the second power controlling circuit **5** becomes a close circuit. Wherein, the second power controlling circuit **5** is also unlimited to be a FET, it could be a any type FET. Wherein the apparatus further comprising an indicator (not shown) or a buzzer (not shown) for awaking user.

Now taking an example to explain the working situation of the present invention, the DETCARDIN signal becoming disable When there is no AGP graphic card plugged in the AGP slot **2**, furthermore, making the first power controlling circuit **4** become close circuit; While the TYPEDET becoming disabled and then turning off the detection circuit **3**, and making the DETAGP2X signal disabled, furthermore, making the second power controlling circuit 5 becomes a close circuit. Therefore, the DC power could provide to the chipset (not shown) via the first power controlling circuit **4** when user pressing the button **6**.

When an AGP4X graphic card is plugged in the AGP slot **2**, the DETCARDIN signal becoming enabled, furthermore, making the first power controlling circuit **4** becomes an open circuit; While the TYPEDET becoming disabled and then turning off the detection circuit **3**, and making the DETAGP2X signal disabled, furthermore, making the second power controlling circuit **5** becomes a close circuit. Therefore, the DC power could provide to the chipset (not shown) via the second power controlling circuit **5** when user pressing the button **6**.

When an AGP2X graphic card is plugged in the AGP slot **2**, the DETCARDIN signal becoming enabled, furthermore, making the first power controlling circuit **4** becomes an open circuit; While the TYPEDET becoming enabled and then turning on the detection circuit **3**, and making the DETAGP2X signal enabled, furthermore, making the second power controlling circuit **5** becomes an open circuit. Therefore, the DC power could not provide to the chipset (not shown) via the first power controlling circuit **4** or the second power controlling circuit **5** when user pressing the button **6** to prevent burning the motherboard **1**.

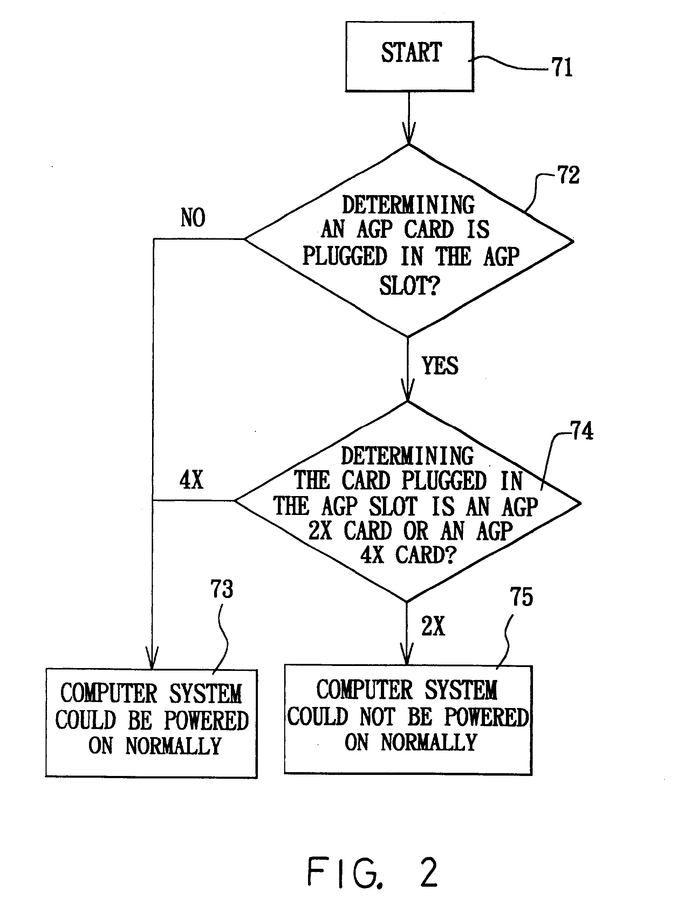

Referring to Fig. 2 shows a flowchart of a method for preventing a motherboard from burning in accordance with one embodiment of the present invention. As shown in Fig. 2, the method for preventing a motherboard from burning comprises the steps of: providing a detection circuit **3** for determining if an AGP card plugged in the AGP slot **2** (step 72); providing a first power controlling circuit **4** (step **73**), if there is no card plugged in the AGP slot **2**, making the first power controlling circuit **4** becomes an open circuit, and making the DC power provides to the chipset (not shown) and the motherboard **1** being powered on normally, if there is an AGP card plugged in the AGP slot **2,** making the first power controlling circuit **4** becomes a close circuit; determining the card plugged in the AGP slot is an AGP2X card or an AGP4X card (step **74**); and providing a second power controlling circuit **5** (step **75**), if the AGP card plugged in the AGP slot is an AGP4X card, making the first power controlling circuit **4** becomes an open circuit, and then the DC power could pass to the motherboard **1** and the motherboard **1** being powered on normally; if the AGP card plugged in the AGP slot is an AGP2X card, making the second power controlling circuit **5** becomes an open circuit to prevent the DC power passing to the motherboard **1** so as to achieve an objective to prevent the motherboard from burning. Wherein the method further comprising an indicator (not shown) or a buzzer (not shown) for awaking user.

While the invention has been described with reference to a preferred embodiment thereof, it is to be understood that modifications or variations may be easily made without departing from the spirit of this invention, which is defined by the appended claims.

## Claims

1. An apparatus for preventing burning a motherboard, wherein, said motherboard comprising an AGP slot, and said AGP slot comprising a DETCARDIN signal and a TYPEDET signal, said apparatus comprises:
a detection circuit, coupled to said AGP slot, determining a card plugged in said AGP slot being an AGP2X card or an AGP4X card according to said TYPEDET signal, and generating a DETAGP2X signal when detecting said AGP2X card;
a first power controlling circuit, coupled to said AGP slot, making said first power controlling circuit becomes an open circuit when said DETCARDIN signal enabling, and making said first power controlling circuit becomes a close circuit when said DETCARDIN signal disabling;
a second power controlling circuit, coupled to said detection circuit, making said second power controlling circuit becomes an open circuit when said DETAGP2X signal enabling, and making said second power controlling circuit becomes a close circuit when said DETAGP2X signal disabling; and
a button, one end of said button coupled to said first power controlling circuit and said second power controlling circuit and another end of said button coupled to ground, making a DC power pass through said first power controlling circuit and said second power controlling circuit for providing said DC power to said motherboard when said button is pressed.

2. An apparatus for preventing a motherboard from burning as claimed in claim 1, wherein said detection circuit is a transistor preferably.

3. An apparatus for preventing a motherboard from burning as claimed in claim 1, wherein said first power controlling circuit and said second power controlling circuit are FETs preferably.

4. An apparatus for preventing a motherboard from burning as claimed in claim 1, wherein said apparatus further comprising an indicator or a buzzer for awaking user.

5. A method for preventing burning a motherboard, wherein, said motherboard comprising an AGP slot, and said AGP slot comprising a DETCARDIN signal and a TYPEDET signal, comprises the steps of:
providing a detection circuit for determining an AGP card plugged in said AGP slot;
providing a first power controlling circuit; if there is no card plugged in said AGP slot, making said first power controlling circuit becomes an open circuit; if there is an AGP card plugged in said AGP slot, making said first power controlling circuit becomes a close circuit;
determining said card plugged in said AGP slot being an AGP2X card or an AGP4X card; and
providing a second power controlling circuit, if said AGP card plugged in said AGP slot is an AGP4X card, making said first power controlling circuit becomes an open circuit, and then a DC power could pass to said motherboard and said motherboard could be powered on normally; if said AGP card plugged in said AGP slot is an AGP2X card, making said second power controlling circuit becomes an open circuit to prevent said DC power passing to said motherboard so as to achieve an objective to prevent said motherboard from burning.

6. A method for preventing a motherboard from burning as claimed in claim 5, wherein said detection circuit is a transistor preferably.

7. A method for preventing a motherboard from burning as claimed in claim 5, wherein said first power controlling circuit and said second power controlling circuit are FETs preferably.

8. A method for preventing a motherboard from burning as claimed in claim 5, wherein said method further comprises a step of: comprising an indicator or a buzzer for awaking user.
